# EUROPÄISCHE PATENTSCHRIFT

(11) **EP 3 269 033 B1**
(45) Veröffentlichungstag und Bekanntmachung des Hinweises auf die Patenterteilung: **24.02.2021**
(21) Anmeldenummer: 15719177.6
(22) Anmeldetag: 21.04.2015
(51) Int. Cl.: H02M 7/483

(54) **ELEKTRISCHE ANORDNUNG MIT TEILMODULEN**
ELECTRICAL DEVICE WITH SUBMODULES
DISPOSITIF ELECTRIQUE COMPRENANT DES SOUS-MODULES

(43) Veröffentlichungstag der Anmeldung: 17.01.2018
(73) Patentinhaber: Siemens Energy Global GmbH & Co. KG, 81739 München (DE)
(72) Erfinder: ALVAREZ VALENZUELA, Rodrigo Alonso, 90408 Nürnberg (DE); KNAAK, Hans-Joachim, 91054 Erlangen (DE); PIESCHEL, Martin, 90473 Nürnberg (DE)
(86) Internationale Anmeldenummer: PCT/EP2015/058594
(87) Internationale Veröffentlichungsnummer: WO 2016/169588

(56) Entgegenhaltungen:
- WO-A2-2012/156261

## Beschreibung

Die Erfindung bezieht sich auf eine Anordnung, insbesondere in Form einer Umrichteranordnung, mit zumindest einem Wechselspannungsanschluss, an dem ein Wechselstrom eingespeist oder entnommen werden kann, zumindest einer Reihenschaltung mit mindestens zwei in Reihe geschalteten Teilmodulen und einer Ansteuereinheit zur Ansteuerung der Teilmodule, wobei die Teilmodule der Reihenschaltung jeweils mindestens zwei Schaltelemente und einen Kondensator umfassen.

Eine entsprechende Anordnung ist in der internationalen Patentanmeldung WO 2012/156261 A2 beschrieben. Bei dieser Anordnung handelt es sich um einen Multilevelumrichter.

Der Erfindung liegt die Aufgabe zugrunde, eine Anordnung der eingangs angegebenen Art hinsichtlich des Anlaufverhaltens bzw. des Aufladeverhaltens der Kondensatoren in den Teilmodulen zu verbessern.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass die Teilmodule jeweils eine mit der Ansteuereinheit in Verbindung stehende, teilmoduleigene Steuereinrichtung aufweisen, die die Schaltelemente des jeweiligen Teilmoduls ansteuert und ihre Betriebsspannung von dem Kondensator des jeweiligen Teilmoduls erhält, und die Anordnung mindestens eine Umschalteinrichtung aufweist, die mit der zumindest einen Reihenschaltung in Verbindung steht und gesteuert von der Ansteuereinheit die an der Reihenschaltung anliegende Reihenschaltungsspannung umschalten kann und nach einer Inbetriebnahme der Anordnung - zum Aufladen der Kondensatoren der Teilmodule - in einen Auflademodus geschaltet wird, in dem sie die zumindest eine Reihenschaltung anders beschaltet als in einem sich nach Abschluss des Auflademodus an den Auflademodus anschließenden Normalbetriebsmodus.

Ein wesentlicher Vorteil der erfindungsgemäßen Anordnung ist darin zu sehen, dass bei dieser eine spezielle Anlaufphase bzw. ein spezieller Auflademodus vorgesehen ist, der vor dem anschließenden Normalbetriebsmodus ausgeführt wird und ein sicheres Aufladen der Kondensatoren der Teilmodule ermöglicht.

Bei der Anordnung handelt es sich vorzugsweise um eine Umrichteranordnung, insbesondere eine Umrichteranordnung in Form eines Multilevelumrichters.

Vorzugsweise beaufschlagt die Umschalteinrichtung in dem Auflademodus die Reihenschaltung mit einer höheren Reihenschaltungsspannung als in dem Normalbetriebsmodus.

Bezüglich eines Umschaltens vom Auflademodus in den Normalbetriebsmodus wird es als besonders vorteilhaft angesehen, wenn die Ansteuereinheit die Umschalteinrichtung von dem Auflademodus in den Normalbetriebsmodus umschaltet, sobald alle Steuereinrichtungen der Teilmodule der Ansteuereinheit Betriebsbereitschaft, insbesondere eine für einen Betrieb ausreichende Kondensatorspannung des jeweiligen Teilmoduls, anzeigen.

Bei einer besonders bevorzugten Ausgestaltung der Anordnung ist vorgesehen, dass die Anordnung mehrphasig ist und eine Mehrzahl, zumindest zwei, an Wechselspannungsanschlüssen aufweist, an denen jeweils ein Phasenstrom eines mehrphasigen Eingangswechselstromes eingespeist oder entnommen werden kann, wobei die Anordnung pro Phase jeweils zumindest eine Reihenschaltung mit mindestens zwei in Reihe geschalteten Teilmodulen umfasst. Vorzugsweise werden die Kondensatoren der Teilmodule in dem Auflademodus mit einem an den Wechselspannungsanschlüssen eingespeisten Wechselstrom geladen; alternativ kann - wie weiter unten noch erläutert wird - in ebenfalls vorteilhafter Weise ein Aufladen von einer (so vorhanden) Gleichspannungsseite der Anordnung aus erfolgen.

Mit Blick auf ein sicheres Aufladen der Kondensatoren wird es als vorteilhaft angesehen, wenn die Umschalteinrichtung in dem Auflademodus die an sie angeschlossenen Reihenschaltungen jeweils mit einer zwischen zwei Wechselspannungsanschlüssen anliegenden Leiter-Leiter-Spannung beaufschlagt.

Vorzugsweise ist die Anordnung dreiphasig; bei einer solchen Ausführung ist es vorteilhaft, wenn die Umschalteinrichtung die an sie angeschlossenen Reihenschaltungen in dem Auflademodus elektrisch in eine Dreieckschaltung schaltet.

In dem Normalbetriebsmodus schaltet die Umschalteinrichtung die an sie angeschlossenen Reihenschaltungen vorzugsweise elektrisch in eine Sternpunktschaltung, wobei der Sternpunkt der Sternpunktschaltung einen Pol eines ausgangsseitigen Spannungssystems (z. B. Gleichspannungssystems) der Anordnung bildet, geerdet ist oder potentialmäßig schwebt.

Darüber hinaus kann, wie bereits erwähnt, vorgesehen sein, dass die Anordnung zumindest zwei Gleichspannungsanschlüsse aufweist, in die ein Gleichstrom in die Anordnung eingespeist oder über die ein Gleichstrom aus der Anordnung entnommen werden kann.

Vorzugsweise weist die Anordnung zumindest zwei Umschalteinrichtungen auf, die die an sie angeschlossenen Reihenschaltungen in dem Normalbetriebsmodus jeweils in eine Sternpunktschaltung schalten.

Um einen Anschluss der Anordnung an ein Gleichspannungssystem zu ermöglichen, wird es als vorteilhaft angesehen, wenn die zumindest zwei Gleichspannungsanschlüsse jeweils mit einem Sternpunkt einer der zwei Sternpunktschaltungen verbunden sind.

Im Falle eines Anschlusses der Anordnung an ein Gleichspannungssystem wird es als vorteilhaft angesehen, wenn die Umschalteinrichtung in dem Auflademodus die Kondensatoren der Teilmodule der zumindest einen an sie angeschlossene Reihenschaltung mit einem an den zwei Gleichspannungsanschlüssen eingespeisten Gleichstrom lädt. Ein Anschluss der Wechselspannungsanschlüsse der Anordnung an ein Wechselspannungsnetz erfolgt bei dieser Ausgestaltung vorzugsweise erst nach Abschluss des Aufladmodus bzw. dem Übergang in den Normalbetriebsmodus.

Mit Blick auf eine Begrenzung der Ladeströme bzw. eine Begrenzung von Stromspitzen der Ladeströme wird es als vorteilhaft angesehen, wenn die Umschalteinrichtung in dem Auflademodus die Reihenschaltung bzw. die Reihenschaltungen jeweils mit zumindest einem Ladevorwiderstand in Reihe schaltet.

Die Erfindung bezieht sich darüber hinaus auf ein Verfahren zum Betreiben einer Anordnung mit zumindest einem Wechselspannungsanschluss, an dem ein Wechselstrom eingespeist oder entnommen werden kann, zumindest einer Reihenschaltung mit mindestens zwei in Reihe geschalteten Teilmodulen und einer Ansteuereinheit zur Ansteuerung der Teilmodule, wobei die Teilmodule der Reihenschaltung jeweils mindestens zwei Schaltelemente und einen Kondensator umfassen.

Bezüglich eines solchen Verfahrens ist erfindungsgemäß vorgesehen, dass die mindestens zwei Schaltelemente der Teilmodule jeweils mit einer mit der Ansteuereinheit in Verbindung stehenden teilmoduleigenen Steuereinrichtung gesteuert werden, die ihre Betriebsspannung von dem Kondensator des jeweiligen Teilmoduls erhält, und mit mindestens einer Umschalteinrichtung die an der Reihenschaltung anliegende Reihenschaltungsspannung nach einer Inbetriebnahme der Anordnung - zum Aufladen der Kondensatoren der Teilmodule - in einen Auflademodus geschaltet wird, in dem die Umschalteinrichtung die zumindest eine Reihenschaltung anders beschaltet als in einem sich nach Abschluss des Auflademodus an den Auflademodus anschließenden Normalbetriebsmodus.

Bezüglich der Vorteile des erfindungsgemäßen Verfahrens sei auf die obigen Ausführungen im Zusammenhang mit der erfindungsgemäßen Anordnung verwiesen.

Die Erfindung wird nachfolgend anhand von Ausführungsbeispielen näher erläutert; dabei zeigen beispielhaft
- Figur 1: ein Ausführungsbeispiel für eine erfindungsgemäße Anordnung, bei der eine Umrichtereinrichtung der Anordnung an ein dreiphasiges Energieverteilnetz angeschlossen ist,
- Figur 2: näher im Detail ein Ausführungsbeispiel für eine Umrichtereinrichtung, die bei der Anordnung gemäß Figur 1 eingesetzt werden kann und sechs in einer Brückenschaltung verschaltete Phasenmodule aufweist,
- Figur 3: ein Ausführungsbeispiel für bei der Umrichtereinrichtung gemäß Figur 2 eingesetzte bzw. einsetzbare Phasenmodule,
- Figur 4: ein Ausführungsbeispiel für Teilmodule, die zur Bildung der Phasenmodule gemäß Figur 3 eingesetzt werden können,
- Figur 5: ein weiteres Ausführungsbeispiel für Teilmodule, die bei dem Phasenmodul gemäß Figur 3 eingesetzt werden können,
- Figur 6: die Arbeitsweise bzw. die zwei Schaltzustände einer Umschalteinrichtung der Umrichtereinrichtung gemäß Figur 2,
- Figur 7: ein weiteres Ausführungsbeispiel für eine Umrichtereinrichtung, die bei einer erfindungsgemäßen Anordnung, beispielsweise der Anordnung gemäß Figur 1, eingesetzt werden kann, wobei die Umrichtereinrichtung gemäß Figur 7 ohne äußere Gleichspannungsanschlüsse auskommt,
- Figur 8: ein weiteres Ausführungsbeispiel für eine Umrichtereinrichtung, die bei einer erfindungsgemäßen Anordnung, insbesondere der Anordnung gemäß Figur 1, eingesetzt werden kann, wobei Phasenmodule der Umrichtereinrichtung gemäß Figur 8 einen sogenannten Hexverter bilden,
- Figur 9: die Schaltzustände einer Umschalteinrichtung, die bei der Umrichtereinrichtung gemäß Figur 8 einsetzbar ist,
- Figur 10: ein weiteres Ausführungsbeispiel für eine Umrichtereinrichtung, die bei einer erfindungsgemäßen Anordnung, insbesondere der Anordnung gemäß Figur 1 eingesetzt werden kann, wobei die Umrichtereinrichtung gemäß Figur 10 sechs Phasenmodule aufweist, die zu einem Hexverter verschaltet sind,
- Figur 11: ein weiteres Ausführungsbeispiel für eine Umrichtereinrichtung, die bei einer erfindungsgemäßen Anordnung, insbesondere der Anordnung gemäß Figur 1 eingesetzt werden kann, wobei bei der Umrichtereinrichtung gemäß Figur 11 sechs Phasenmodule in einer Brückenschaltung verschaltet sind,
- Figur 12: Schaltzustände einer Umschalteinrichtung, die bei der Umrichtereinrichtung gemäß Figur 11 eingesetzt werden kann,
- Figur 13: ein weiteres Ausführungsbeispiel für eine Umrichtereinrichtung, die bei einer erfindungsgemäßen Anordnung, insbesondere der Anordnung gemäß Figur 1, eingesetzt werden kann, wobei bei der Umrichtereinrichtung gemäß Figur 13 sechs Phasenmodule in einer Brückenschaltung verschaltet sind und zwei unterschiedliche Arten von Umschalteinrichtungen zum Umschalten des Arbeitsmodus der Anordnung eingesetzt werden, nämlich beispielsweise die Art Umschalteinrichtung gemäß Figur 6 und beispielsweise die Art Umschalteinrichtung gemäß Figur 12,
- Figur 14: ein weiteres Ausführungsbeispiel für eine Umrichtereinrichtung, die bei einer erfindungsgemäßen Anordnung, insbesondere der Anordnung gemäß Figur 1, eingesetzt werden kann, wobei bei der Umrichtereinrichtung gemäß Figur 14 sechs Phasenmodule in einer Brückenschaltung verschaltet sind und zwei unterschiedliche Arten von Umschalteinrichtungen zum Umschalten des Arbeitsmodus der Anordnung eingesetzt werden,
- Figur 15: die Schaltzustände einer Art Umschalteinrichtung, die bei der Umrichtereinrichtung gemäß Figur 13 eingesetzt werden kann, und
- Figur 16: die Schaltzustände einer anderen Art Umschalteinrichtung, die bei der Umrichtereinrichtung gemäß Figur 14 eingesetzt werden kann.

In den Figuren werden der Übersicht halber für identische oder vergleichbare Komponenten stets dieselben Bezugszeichen verwendet.

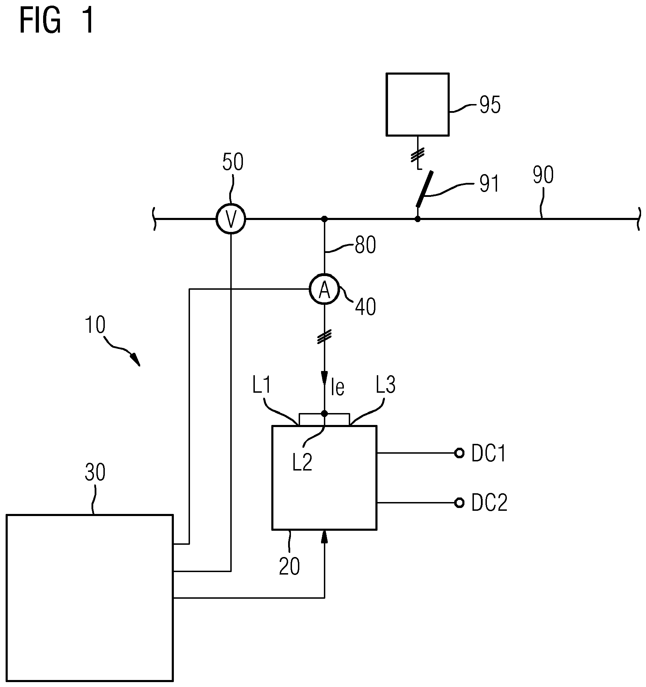

Die Figur 1 zeigt eine Anordnung 10, die eine Umrichtereinrichtung 20, eine Ansteuerschaltung 30, einen Stromsensor 40 sowie einen Spannungssensor 50 umfasst.

Die Umrichtereinrichtung 20 weist drei Wechselspannungsanschlüsse L1, L2 und L3 auf, die an eine dreiphasige elektrische Leitung 80 angeschlossen sind. Über die dreiphasige Leitung 80 steht die Umrichtereinrichtung 20 mit einer Anschlussschiene 90 und über diese und einen Leistungsschalter 91 mit einem nur schematisch angedeuteten Energieverteilnetz 95 in Verbindung.

In der Figur 1 erkennt man darüber hinaus zwei Gleichspannungsanschlüsse, die mit den Bezugszeichen DC1 und DC2 gekennzeichnet sind und einen Anschluss der Umrichtereinrichtung 20 an ein nicht weiter dargestelltes Gleichspannungsnetz ermöglichen.

Die Anordnung 10 gemäß Figur 1 kann beispielsweise wie folgt betrieben werden:
Die Ansteuerschaltung 30 misst mittels des Stromsensors 40 den eingangsseitig in die Umrichtereinrichtung 20 hineinfließenden (oder aus dieser herausfließenden) dreiphasigen Eingangswechselstrom Ie und mit dem Spannungssensor 50 die an der Umrichtereinrichtung 20 anliegende dreiphasige Eingangsspannung und bestimmt mit diesen Messwerten den Zustand des Energieverteilnetzes 95. Außerdem ermittelt sie anhand von Messwerten, die von nicht weiter gezeigten Strom- und/oder Spannungssensoren innerhalb der Umrichtereinrichtung 20 erfasst werden, den Arbeitszustand der Umrichtereinrichtung 20.

Mit Hilfe der Messwerte ermittelt die Ansteuerschaltung 30 außerdem eine optimale Ansteuerung der Umrichtereinrichtung 20 derart, dass das Energieverteilnetz 95 einen möglichst optimalen Netzzustand annimmt und sich die Umrichtereinrichtung 20 in einem günstigen Arbeitszustand befindet.

Außerdem steuert sie den Leistungsschalter 91 an, um die Verbindung mit dem Energieverteilnetz 95 herzustellen oder zu unterbrechen.

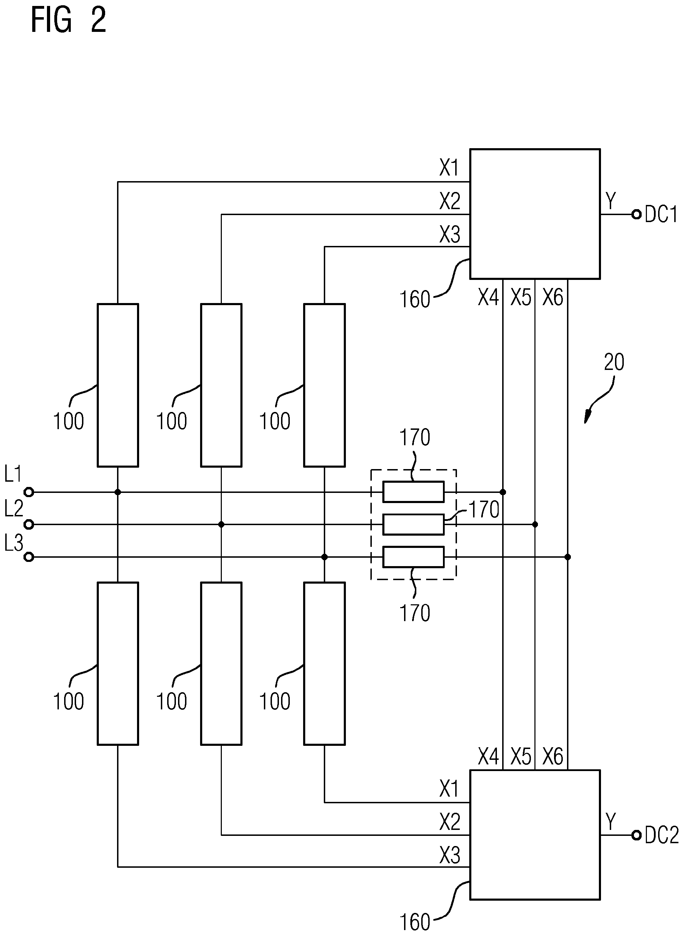

Die Figur 2 zeigt ein Ausführungsbeispiel für eine Umrichtereinrichtung 20, die bei der Anordnung 10 gemäß Figur 1 eingesetzt werden kann. Die Umrichtereinrichtung 20 gemäß Figur 2 weist sechs Phasenmodule 100 auf, die in einer Brückenschaltung verschaltet sind. Mit den Phasenmodulen 100 arbeiten zwei Umschalteinrichtungen 160 zusammen, die vorzugsweise von der Ansteuerschaltung 30 gemäß Figur 1 angesteuert werden.

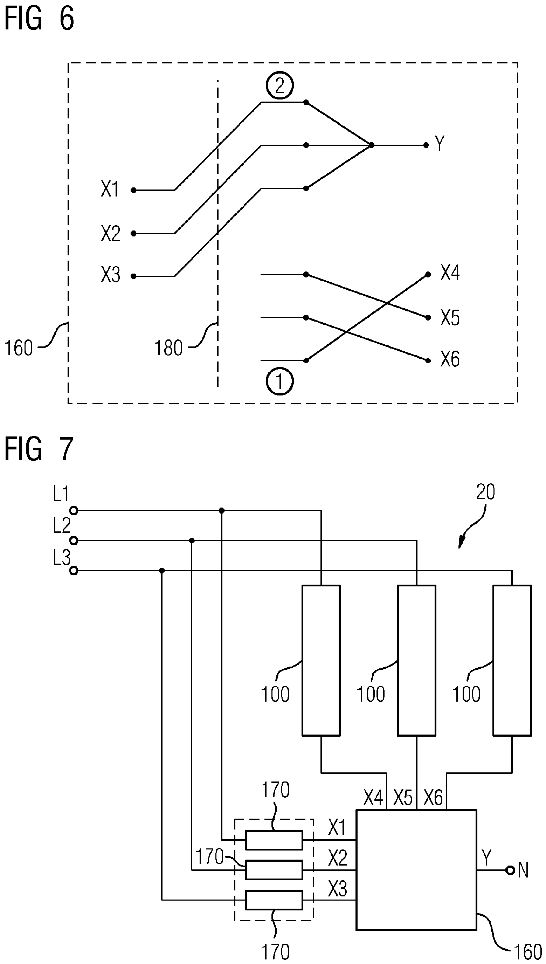

Die beiden Umschalteinrichtungen 160 können jeweils zwei Schaltzustände einnehmen, von denen einer die Umrichtereinrichtung 20 in einen Auflademodus nach einer Inbetriebnahme der Anordnung 10 gemäß Figur 1 schaltet und der andere die Umrichtereinrichtung 20 in einen Normalbetriebsmodus nach Abschluss des Auflademodus schaltet. Die beiden Schaltzustände der beiden Umschalteinrichtungen 160 gemäß Figur 2 sind in der Figur 6 näher dargestellt.

Die Figur 6 zeigt, dass die Umschalteinrichtung 160 gemäß Figur 2 einen Wechselschalter 180 aufweist, der eine erste Schaltstellung, die mit dem Bezugszeichen "1" gekennzeichnet ist, und eine zweite Schaltstellung, die mit dem Bezugszeichen "2" gekennzeichnet ist, einnehmen kann.

In der ersten Schaltstellung "1" verbindet der Wechselschalter 180 die Anschlüsse X1 bis X3 mit den Anschlüssen X4 bis X6 über Kreuz derart, dass die an die Umschalteinrichtung 20 angeschlossenen Phasenmodule 100 in eine Dreieckschaltung geschaltet werden.

In der zweiten Schalterstellung "2" verbindet der Wechselschalter 180 die Anschlüsse X1 bis X3 mit einem Sternpunkt Y, so dass die an den Anschlüssen X1 bis X3 angeschlossenen Phasenmodule 100 in eine Sternschaltung geschaltet werden.

Werden also bei der Umrichtereinrichtung 20 gemäß Figur 2 die beiden Umschalteinrichtungen 160 in die erste Schaltstellung "1" geschaltet, so werden die oberen drei Phasenmodule 100 durch die obere Umschalteinrichtung 160 in eine obere Dreieckschaltung geschaltet, und es werden die in der Figur 2 unteren drei Phasenmodule 100 durch die untere Umschalteinrichtung 160 in eine in der Figur 2 untere Dreieckschaltung geschaltet. Mit anderen Worten werden durch die beiden Umschalteinrichtungen 160 also zwei Dreieckschaltungen mit jeweils drei Phasenmodulen gebildet.

In die erste Schaltstellung werden die beiden Umschalteinrichtungen 160 nach einer Inbetriebnahme der Anordnung 10 gemäß Figur 1 geschaltet, um ein möglichst schnelles und sicheres Aufladen von Kondensatoren, die in den Phasenmodulen 100 enthalten sind, auf eine vorgegebene Mindestkondensatorspannung zu ermöglichen. In der ersten Schaltstellung der Umschalteinrichtungen 160 bzw. in der Dreieckschaltung der Phasenmodule 100 werden die Phasenmodule 100 nämlich jeweils mit Leiter-Leiter-Spannungen des dreiphasigen Energieverteilnetzes 95 gemäß Figur 1 beaufschlagt, wodurch ein maximaler Spannungsschub und ein sicheres Aufladen der Kondensatoren der Phasenmodule auf die Mindestkondensatorspannung sichergestellt wird. In der ersten Schaltstellung der Umschalteinrichtung 160 wird die Umrichtereinrichtung 20 mit anderen Worten also in einen Auflademodus geschaltet, der speziell zum Aufladen der Kondensatoren der Phasenmodule 100 über das Energieverteilnetz 95 dient.

Nach Abschluss des Auflademodus werden die beiden Umschalteinrichtungen 160 in einen Normalbetriebsmodus geschaltet, indem die Wechselschalter 180 in die zweite Schaltstellung gebracht werden. In der zweiten Schaltstellung werden die Anschlüsse X1, X2 und X3 bzw. die darin angeschlossenen Phasenmodule 100 jeweils mit einem Sternpunkt Y verbunden. Der in der Figur 2 obere Sternpunkt Y der oberen Umschalteinrichtung 160 bildet dabei den oberen Gleichspannungsanschluss DC1 der Umrichtereinrichtung 20, und der in der Figur 2 untere Sternpunkt Y der unteren Umschalteinrichtung 160 bildet den unteren Gleichspannungsanschluss DC2 der Umrichtereinrichtung 20.

In der zweiten Schaltstellung der Umschalteinrichtungen 160 kann die Umrichtereinrichtung 20 gemäß Figur 2 somit eine Schnittstelle zwischen dem dreiphasigen Energieverteilnetz 95 gemäß Figur 1 und einem nicht weiter dargestellten Gleichspannungsnetz bilden, das an die Gleichspannungsanschlüsse DC1 und DC2 der Umrichtereinrichtung 20 angeschlossen ist oder angeschlossen werden kann.

Um Stromspitzen in den Phasenmodulen 100 im ersten Schaltzustand der Umschalteinrichtungen 160 zu vermeiden, sind bei dem Ausführungsbeispiel gemäß Figur 2 Ladevorwiderstände, nachfolgend kurz Ladewiderstände 170 genannt, vorgesehen, die eine Begrenzung des Stroms bzw. eine Begrenzung von Stromspitzen beim Einschalten der ersten Schaltstellung der Umschalteinrichtungen 160 gewährleisten.

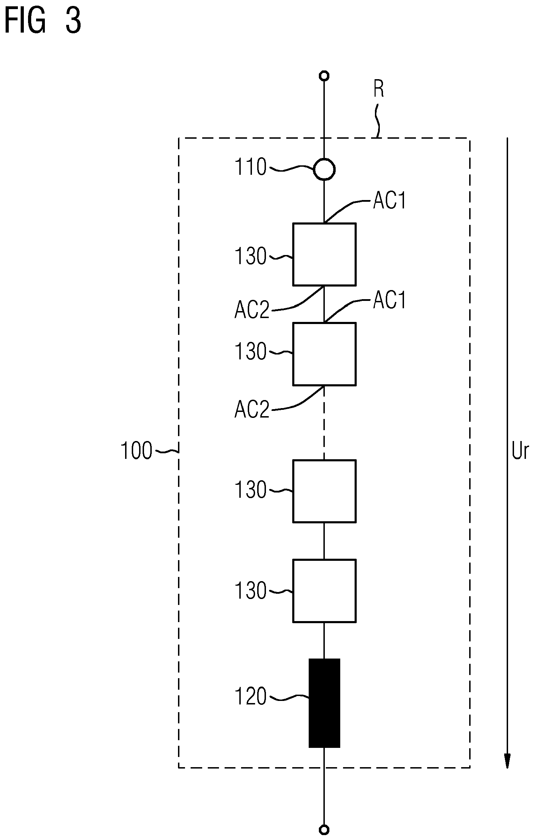

Die Figur 3 zeigt ein Ausführungsbeispiel für den Aufbau der Phasenmodule 100 gemäß Figur 2. Das Phasenmodul 100 gemäß Figur 3 weist eine Vielzahl an in Reihe geschalteten Teilmodulen 130 auf, die mit einer Induktivität 120 in Reihe geschaltet sind und eine Reihenschaltung R bilden. Jedes der Teilmodule 130 weist jeweils zwei Anschlüsse AC1 und AC2 auf, von denen - bei den innenliegenden Teilmodulen 130 - einer mit einem Anschluss eines vorgeordneten Teilmoduls und der andere mit einem Anschluss eines nachgeordneten Teilmoduls verbunden ist.

Das Phasenmodul 100 gemäß Figur 3 bzw. die Reihenschaltung R weist darüber hinaus einen Stromsensor 110 auf, der vorzugsweise mit der Ansteuerschaltung 30 gemäß Figur 1 verbunden ist und einen den jeweiligen Strom durch die Reihenschaltung R bzw. das Phasenmodul 100 angebenden Strommesswert an die Ansteuerschaltung 30 übermittelt. Die an der Reihenschaltung abfallende Reihenschaltungsspannung ist in der Figur 3 mit dem Bezugszeichen Ur gekennzeichnet.

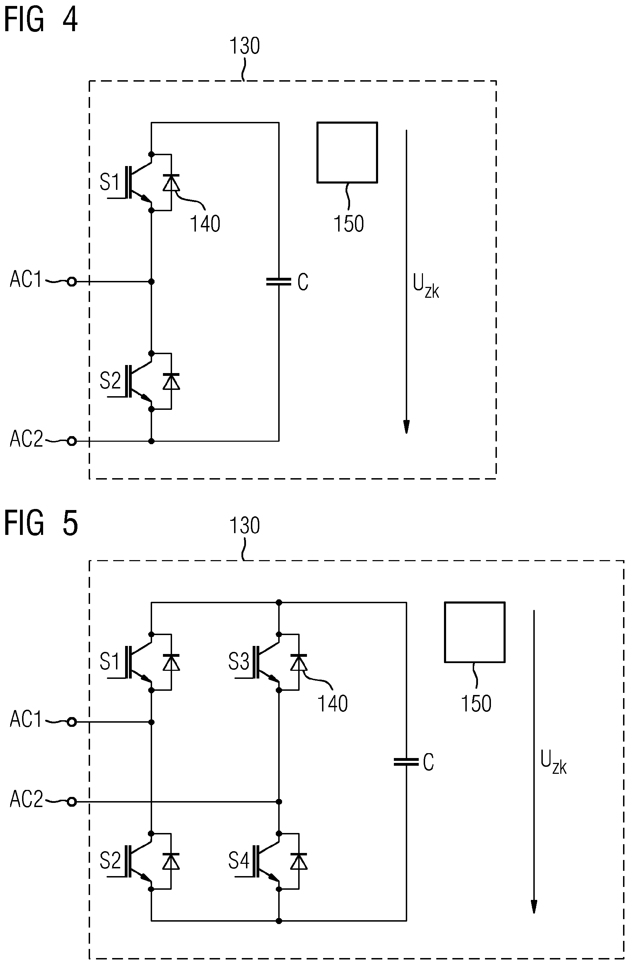

Die Figur 4 zeigt ein Ausführungsbeispiel für ein Teilmodul 130, das bei dem Phasenmodul 100 gemäß Figur 3 bzw. bei der Reihenschaltung R gemäß Figur 3 eingesetzt werden kann. Das Teilmodul 130 weist zwei Schalter S1 und S2 auf, die in Reihe geschaltet sind. Zu jedem der beiden Schalter S1 und S2 ist jeweils eine Diode 140 parallel geschaltet.

Parallel zur Reihenschaltung der beiden Schalter S1 und S2 ist ein Kondensator C geschaltet, dessen Kondensatorspannung in der Figur 4 mit dem Bezugszeichen Uzk gekennzeichnet ist.

Die Ansteuerung der beiden Schalter S1 und S2 erfolgt durch eine teilmoduleigene Steuereinrichtung 150, die mit den beiden Schaltern S1 und S2 über aus Gründen der Übersicht nicht gezeigte Steuerleitungen verbunden ist und die Schalter S1 und S2 ansteuert.

Die Betriebsspannung für die teilmoduleigene Steuereinrichtung 150 wird durch den Kondensator C bzw. die Kondensatorspannung Uzk bereitgestellt. Die Arbeitsfähigkeit bzw. die Betriebsbereitschaft der Steuereinrichtung 150 bzw. die vollständige Betriebsbereitschaft des Teilmoduls 130 hängt also davon ab, ob die Kondensatorspannung Uzk am Kondensator C eine für den Betrieb der Steuereinrichtung 150 nötige Mindestarbeitsspannung erreicht oder nicht.

Die Figur 5 zeigt ein weiteres Ausführungsbeispiel für ein Teilmodul 130, das bei der Reihenschaltung R gemäß Figur 3 bzw. dem Phasenmodul 100 gemäß Figur 3 eingesetzt werden kann.

Das Teilmodul 130 weist vier Schalter S1, S2, S3 und S4 auf, die in einer elektrischen Brückenschaltung verschaltet sind. Parallel zur Brückenschaltung ist ein Kondensator C geschaltet, dessen Kondensatorspannung in der Figur 5 mit dem Bezugszeichen Uzk gekennzeichnet ist. Die Ansteuerung der vier Schalter S1 bis S4 erfolgt mittels einer Steuereinrichtung 150, die mit den vier Schaltern S1 bis S4 über aus Gründen der Übersicht nicht gezeigte Steuerleitungen verbunden ist. Die Betriebsspannung zum Betrieb der Steuereinrichtung 150 wird von dem Kondensator C bzw. der Kondensatorspannung Uzk geliefert. Diesbezüglich gelten die obigen Ausführungen im Zusammenhang mit der Figur 4 entsprechend.

Bei den Schaltern S1 bis S4 kann es sich um Halbleiterschalter, beispielsweise um Halbleiterschalter der Bauart IGBT, IGCT, IEGT oder MOSFET, handeln.

Zusammengefasst lässt sich die Anordnung 10 gemäß Figur 1 bei einer Ausstattung mit einer Umrichtereinrichtung 20 gemäß Figur 2 also wie folgt betreiben.

Nach einer Inbetriebnahme der Anordnung schaltet die Ansteuerschaltung 30 gemäß Figur 1 die Umschalteinrichtungen 160 der Umrichtereinrichtung 20 vorzugsweise jeweils in die erste Schaltstellung "1" gemäß Figur 6, wodurch die Phasenmodule 100 in eine Dreieckschaltung geschaltet werden und jeweils mit Leiter-Leiter-Spannungen des dreiphasigen Energieverteilnetzes 95 beaufschlagt werden. Der Spannungshub an den Phasenmodulen 100 beträgt somit jeweils das √3-fache der Nennspannung des Energieverteilnetzes 95.

Durch die hohe Spannung, die an den Phasenmodulen 100 anliegt, wird sichergestellt, dass die Kondensatoren C in den Teilmodulen 130 der Reihenschaltungen R gemäß Figur 3 bzw. der Phasenmodule 100 gemäß Figur 3 eine ausreichende Betriebsspannung erreichen, deren teilmoduleigene Steuereinrichtungen 150 in Betrieb gehen können und die teilmoduleigenen Steuereinrichtungen die Steuerung der teilmoduleigenen Schalter S1 und S2 (vgl. Ausführungsform gemäß Figur 4) oder S1 bis S4 (vgl. Ausführungsform gemäß Figur 5) übernehmen können.

Sobald die Spannung an den Kondensatoren C der Teilmodule 130 ausreichend groß ist und die zum Betrieb der Steuereinrichtungen 150 erforderliche Betriebsspannung erreicht ist, gehen die Steuereinrichtungen 150 in Betrieb und melden ihre Betriebsbereitschaft an die Ansteuerschaltung 130 über in den Figuren aus Gründen der Übersicht nicht weiter dargestellte Signalleitungen.

Sobald die Ansteuerschaltung 30 von allen Steuereinrichtungen 150 der Teilmodule eine Rückmeldung erhalten hat, dass eine Arbeitsbereitschaft der Steuereinrichtungen vorliegt, schaltet sie von dem Auflademodus bzw. von der ersten Schaltstellung "1" gemäß Figur 6 in die zweite Schaltstellung "2" gemäß Figur 6 bzw. in einen Normalbetriebsmodus, in dem die Phasenmodule 100 gemäß Figur 2 jeweils in die Sternpunktschaltung gebracht werden und jeweils mit einem der Gleichspannungsanschlüsse DC1 bzw. DC2 verbunden werden.

Die Figur 7 zeigt ein weiteres Ausführungsbeispiel für eine Umrichtereinrichtung 20, die bei der Anordnung gemäß Figur 1 eingesetzt werden kann. Die Umrichtereinrichtung 20 gemäß Figur 7 weist drei Phasenmodule 100, drei Ladewiderstände 170 sowie eine Umschalteinrichtung 160 auf, deren Funktionsweise bereits im Zusammenhang mit den Figuren 1 bis 6 erläutert worden ist.

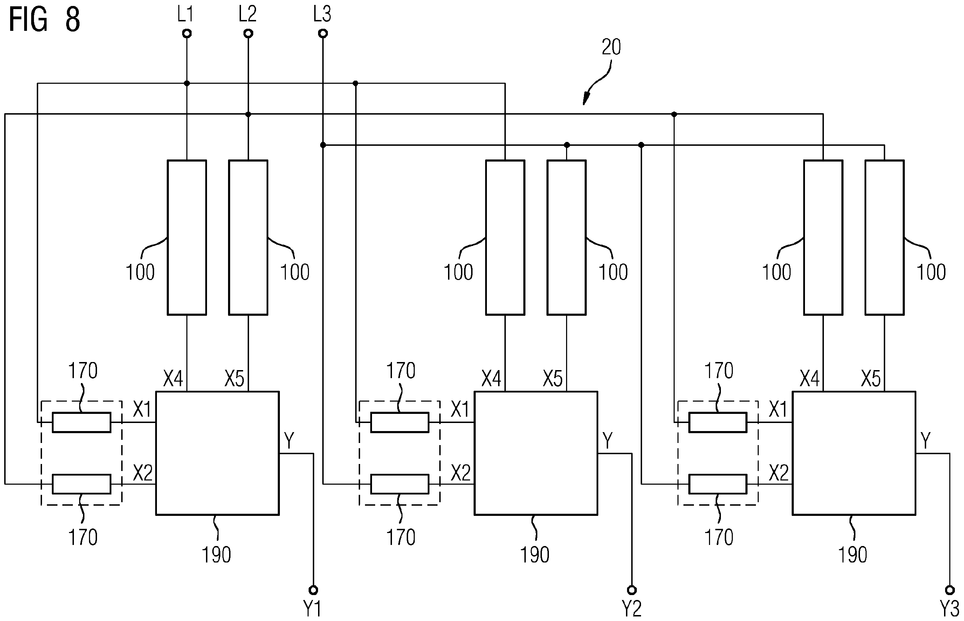

Im Unterschied zu der Ausführungsvariante gemäß Figur 2 ist bei der Umrichtereinrichtung 20 gemäß Figur 7 kein Anschluss an ein externes Gleichspannungsnetz vorgesehen, so dass entsprechende Gleichspannungsanschlüsse, wie sie bei der Ausführungsvariante gemäß Figur 2 vorgesehen sind, fehlen. Im Übrigen gelten die Ausführungen im Zusammenhang mit den Figuren 1 bis 6 bei dem Ausführungsbeispiel gemäß Figur 7 entsprechend. Die Figur 8 zeigt ein weiteres Ausführungsbeispiel für eine Umrichtereinrichtung 20, die bei der Anordnung 10 gemäß Figur 1 eingesetzt werden kann. Die Umrichtereinrichtung 20 weist drei Wechselspannungsanschlüsse L1, L2 und L3 auf, die zum Anschluss an das Energieverteilnetz 95 gemäß Figur 1 dienen. Darüber hinaus weist die Umrichtereinrichtung 20 drei weitere Wechselspannungsanschlüsse Y1, Y2 und Y3 auf, die einen Anschluss an ein weiteres dreiphasiges Wechselspannungsnetz ermöglichen. Im Unterschied zu der Ausführungsvariante gemäß Figur 2 ermöglicht die Umrichtereinrichtung 20 gemäß Figur 8 somit eine Kopplung bzw. eine Verbindung zweier dreiphasiger Energieverteilnetze miteinander, von denen ein Energieverteilnetz über die Wechselspannungsanschlüsse L1 bis L3 und das andere über die Wechselspannungsanschlüsse Y1 bis Y3 an die Umrichtereinrichtung 20 angeschlossen wird.

Die Umrichtereinrichtung 20 gemäß Figur 8 weist sechs Phasenmodule 100 auf, die dem Phasenmodul 100 gemäß Figur 3 entsprechen können. Die sechs Phasenmodule sind über Umschalteinrichtungen 190 mit den Wechselspannungsanschlüssen Y1 bis Y3 verbunden.

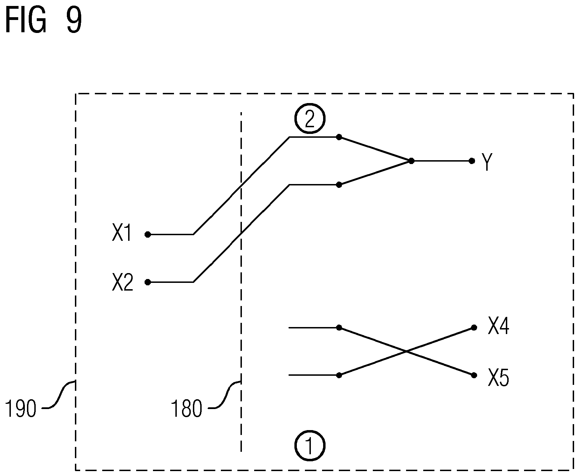

Die Umschalteinrichtungen 190 können jeweils zwei Schaltstellungen aufweisen, die näher in der Figur 9 gezeigt sind. In einer ersten Schaltstellung, die in der Figur 9 mit dem Bezugszeichen "1" gekennzeichnet ist, verbindet ein Wechselschalter 180 der Umschalteinrichtung 190 die Anschlüsse X1 und X2 über Kreuz mit den Anschlüssen X4 und X5. In diese erste Schaltstellung wird die Umschalteinrichtung 190 durch die Ansteuerschaltung 30 gemäß Figur 1 geschaltet, wenn die Anordnung 10 gemäß Figur 1 in Betrieb genommen wird und die Anordnung in einen Auflademodus zum Aufladen der Kondensatoren C gemäß Figur 4 bzw. 5 geschaltet werden soll.

Nach Abschluss des Auflademodus wird die Ansteuerschaltung 30 gemäß Figur 1 die Umschalteinrichtungen 190 jeweils in einen Normalbetriebsmodus schalten, in dem die Wechselschalter 180 jeweils die in der Figur 9 mit dem Bezugszeichen "2" bezeichnete zweite Schaltstellung einnehmen. In der zweiten Schalstellung werden die Anschlüsse X1 und X2 jeweils mit einem Sternpunkt Y verbunden.

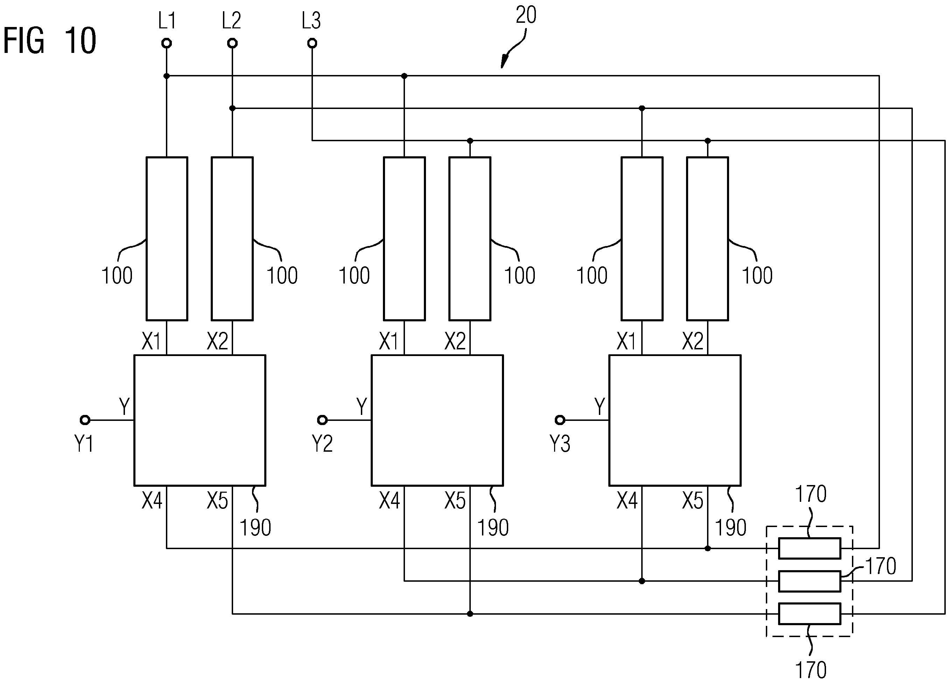

Die Figur 10 zeigt ein weiteres Ausführungsbeispiel für eine Umrichtereinrichtung 20, die bei der Anordnung 10 gemäß Figur 1 eingesetzt werden kann. Die Umrichtereinrichtung 20 gemäß Figur 10 weist sechs Phasenmodule 100 auf, die mit drei Umschalteinrichtungen 190 gemäß Figur 6 verschaltet sind. Zur Begrenzung von Ladeströmen sind Ladewiderstände 170 vorgesehen.

Wird die Umrichtereinrichtung 20 gemäß Figur 10 bei der Anordnung 10 gemäß Figur 1 eingesetzt, so wird die Ansteuerschaltung 30 nach einer Inbetriebnahme die Umschalteinrichtungen 160 jeweils in die mit dem Bezugszeichen "1" bezeichnete erste Schaltstellung schalten, wodurch die Anordnung 10 insgesamt bzw. die Umrichtereinrichtung 20 in einen Auflademodus zum Aufladen der Kondensatoren C der Teilmodule 130 der Phasenmodule 100 gemäß Figur 3 geschaltet wird.

Nachdem die Steuereinrichtungen 150 gemäß den Figuren 4 bzw. 5 ihre Betriebsbereitschaft der Ansteuerschaltung 30 signalisieren, wird die Ansteuerschaltung 30 von dem Auflademodus in den Normalbetriebsmodus schalten, indem sie die Umschalteinrichtungen 190 in die in der Figur 9 gezeigte zweite Schaltstellung "2" schaltet.

Bezüglich der Ausgestaltung der Phasenmodule 100 sei auf die Ausführungen im Zusammenhang mit den Figuren 3 bis 5 und bezüglich der Arbeitsweise der Umschalteinrichtungen 190 auf die Erläuterungen im Zusammenhang mit der Figur 9 verwiesen.

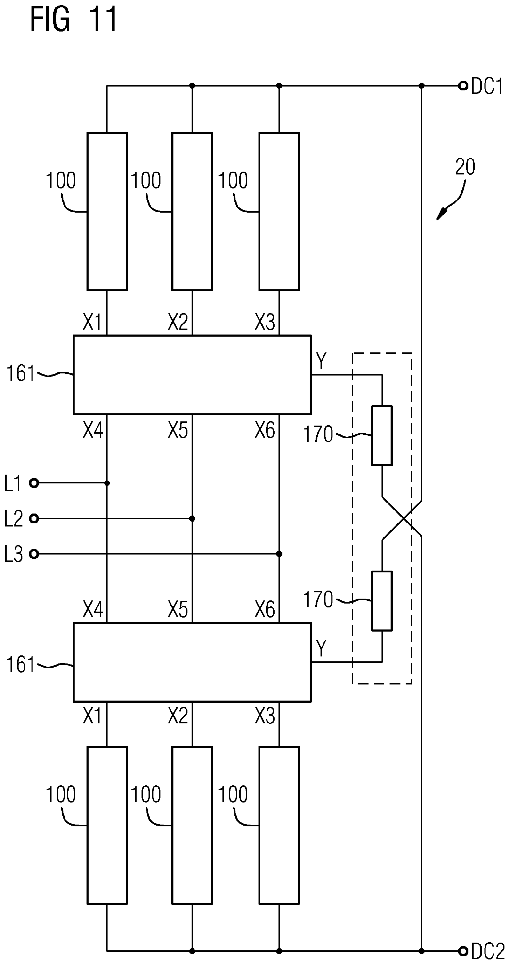

Die Figur 11 zeigt ein weiteres Ausführungsbeispiel für eine Umrichtereinrichtung 20, die bei der Anordnung 10 gemäß Figur 1 eingesetzt werden kann. Man erkennt sechs Phasenmodule 100, die gemäß Figur 3 ausgeführt sein können und Teilmodule 130 gemäß den Figuren 4 und 5 aufweisen können.

Die Umrichtereinrichtung 20 gemäß Figur 11 ist darüber hinaus mit zwei Umschalteinrichtungen 161 sowie Ladewiderständen 170 versehen.

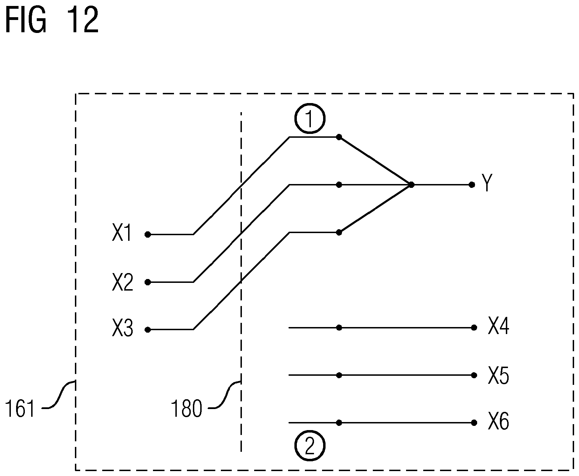

Die Arbeitsweise der Umschalteinrichtungen 161 ist näher in der Figur 12 gezeigt. Man erkennt, dass die Umschalteinrichtungen 161 jeweils zwei Schaltstellungen einnehmen können, nämlich eine erste Schaltstellung, bei der die Anschlüsse X1 bis X3 mit einem Sternpunkt Y verbunden sind, sowie eine zweite Schaltstellung, die mit dem Bezugszeichen "2" gekennzeichnet ist und bei der die Anschlüsse X1 bis X3 mit den Anschlüssen X4 bis X6 verbunden sind.

Zum Aufladen der Kondensatoren C der Teilmodule 130 der Phasenmodule 100 gemäß Figur 3 wird die Ansteuerschaltung 30 gemäß Figur 1 die Umschalteinrichtungen 161 zunächst in die erste Schaltstellung schalten, wodurch ein Aufladen der Kondensatoren C der Teilmodule 130 (vgl. Figuren 3 bis 5) über die Gleichspannungsanschlüsse DC1 und DC2 erfolgen kann.

Nach Abschluss des Auflademodus wird die Ansteuerschaltung 30 gemäß Figur 1 die Umschalteinrichtung 161 in die zweite Schaltstellung "2" schalten, wodurch ein Betrieb der Umrichtereinrichtung 20 ermöglicht wird, wie er auch bei der zweiten Schaltstellung der Umschalteinrichtungen 160 gemäß Figur 2 vorgesehen ist.

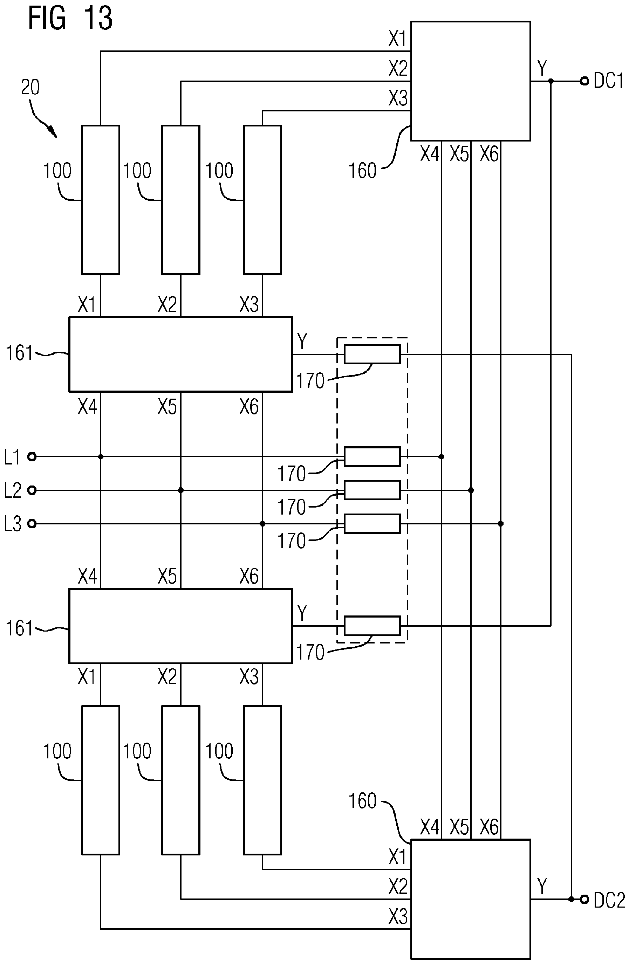

Die Figur 13 zeigt ein weiteres Ausführungsbeispiel für eine Umrichtereinrichtung 20, die bei der Anordnung 10 gemäß Figur 1 eingesetzt werden kann. Man erkennt sechs Phasenmodule 100, die dem Phasenmodul 100 gemäß Figur 3 entsprechen können und in einer Brückenschaltung verschaltet sind. Darüber hinaus erkennt man zwei Umschalteinrichtungen 160 gemäß Figur 6 sowie zwei Umschalteinrichtungen 161 gemäß Figur 12 und Ladewiderstände 170.

Je nach Schaltstellung der Umschalteinrichtungen 160 und 161 ist ein Auflademodus bzw. ein Aufladen der Kondensatoren C der Teilmodule 130 (vgl. Figuren 3 bis 5) sowohl von der Gleichspannungsseite, also über die Gleichspannungsanschlüsse DC1 und DC2, als auch über die Wechselspannungsseite, also die Wechselspannungsanschlüsse L1 bis L3, möglich. Bezüglich des Aufladens der Kondensatoren C der Teilmodule 130 sei auf die obigen Erläuterungen verwiesen, die hier entsprechend gelten.

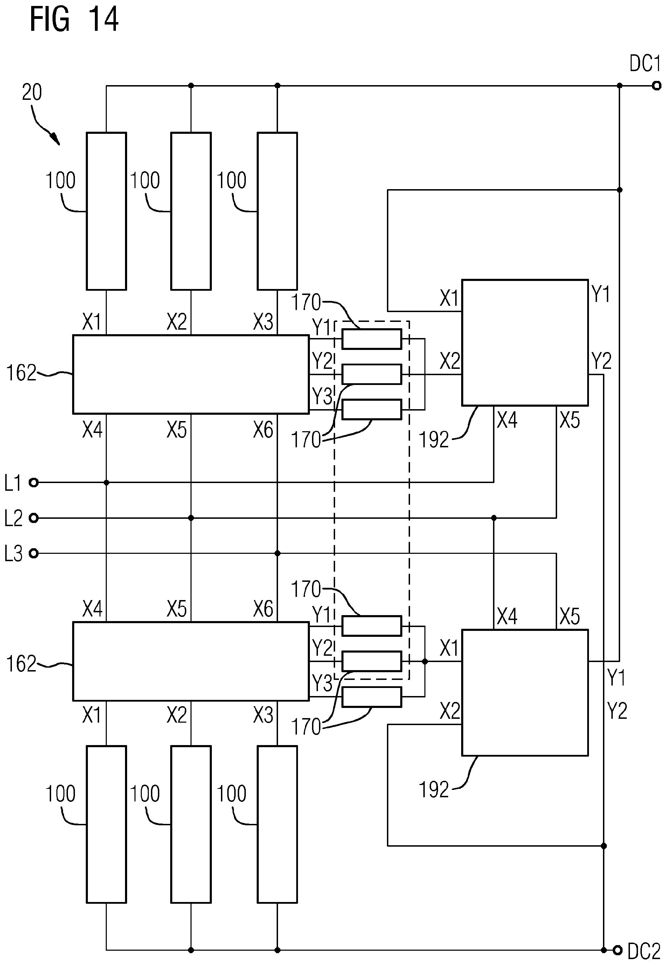

Die Figur 14 zeigt ein weiteres Ausführungsbeispiel für eine Umrichtereinrichtung 20, die bei der Anordnung 10 gemäß Figur 1 eingesetzt werden kann. Man erkennt sechs Phasenmodule 100, die dem Phasenmodul 100 gemäß Figur 3 entsprechen können und mit Teilmodulen 130 gemäß Figuren 4 und 5 versehen sein können.

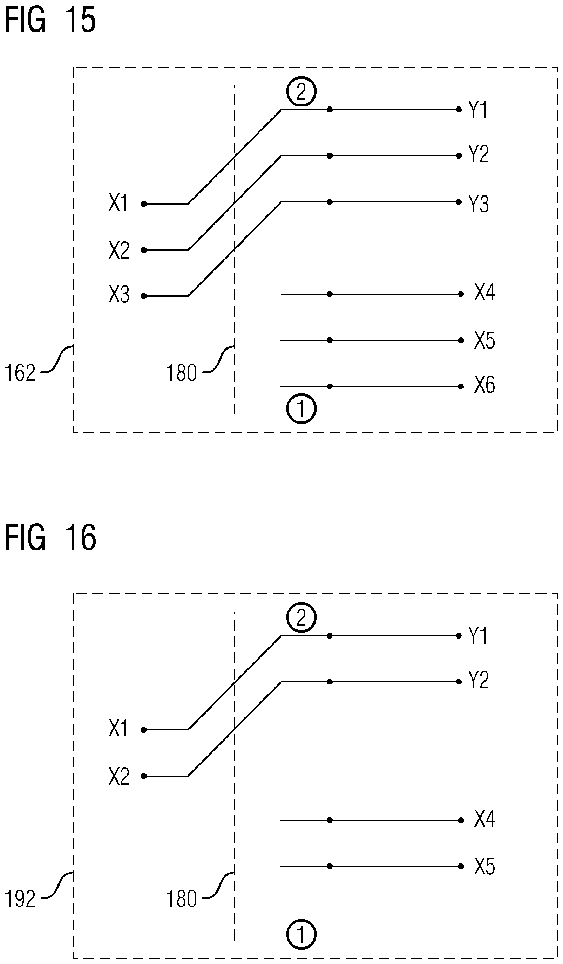

Darüber hinaus weist die Umrichtereinrichtung 20 gemäß Figur 14 zwei Umschalteinrichtungen 162 und zwei Umschalteinrichtungen 192 auf, deren mögliche Schaltzustände in den Figuren 15 und 16 näher gezeigt sind. Zur Begrenzung von Ladeströmen in der Aufladephase bzw. im Auflademodus sind bei der Umrichtereinrichtung 20 gemäß Figur 14 Ladewiderstände 170 vorgesehen.

Je nach der Schaltstellung der Umschalteinrichtungen 162 und 192 kann ein Aufladen der Kondensatoren C der Teilmodule 130 (vgl. Figuren 3 bis 5) über die Wechselspannungsseite, also über die Wechselspannungsanschlüsse L1 bis L3, oder über die Gleichspannungsseite, also über die Gleichspannungsanschlüsse DC1 und DC2, erfolgen.

Bezüglich des Auflademodus und des Umschaltens vom Auflademodus in den Normalbetriebsmodus sei auf die obigen Ausführungen im Zusammenhang mit den Figuren 1 bis 13 verwiesen, die hier entsprechend gelten.

### Bezugszeichenliste

- 1: erste Schaltstellung
- 2: zweite Schaltstellung
- 10: Anordnung
- 20: Umrichtereinrichtung
- 30: Ansteuerschaltung
- 40: Stromsensor
- 50: Spannungssensor
- 80: elektrische Leitung
- 90: Anschlussschiene
- 91: Leistungsschalter
- 95: Energieverteilnetz
- 100: Phasenmodule
- 110: Stromsensor
- 120: Induktivität
- 130: Teilmodul
- 140: Diode
- 150: Steuereinrichtung
- 160: Umschalteinrichtung
- 161: Umschalteinrichtung
- 162: Umschalteinrichtung
- 170: Ladewiderstand
- 180: Wechselschalter
- 190: Umschalteinrichtung
- 192: Umschalteinrichtung

- AC1: Anschluss
- AC2: Anschluss
- C: Kondensator
- DC1: Gleichspannungsanschluss
- DC2: Gleichspannungsanschluss
- Ie: Eingangswechselstrom
- L1-L3: Wechselspannungsanschlüsse
- R: Reihenschaltung
- S1-S4: Schalter
- Ur: Reihenschaltungsspannung
- Uzk: Kondensatorspannung
- X1-X6: Anschlüsse
- Y: Sternpunkt
- Y1-Y3: Wechselspannungsanschlüsse

## Patentansprüche

1. Anordnung (10) mit
- zumindest einem Wechselspannungsanschluss (L1, L2, L3), an dem ein Wechselstrom (Ie) eingespeist oder entnommen werden kann,
- zumindest einer Reihenschaltung (R) mit mindestens zwei in Reihe geschalteten Teilmodulen (130) und
- einer Ansteuereinheit (30) zur Ansteuerung der Teilmodule (130),
- wobei die Teilmodule (130) der Reihenschaltung (R) jeweils mindestens zwei Schaltelemente (S1-S4) und einen Kondensator (C) umfassen,
**dadurch gekennzeichnet, dass**
- die Teilmodule (130) jeweils eine mit der Ansteuereinheit (30) in Verbindung stehende, teilmoduleigene Steuereinrichtung (150) aufweisen, die dazu eingerichtet ist, die Schaltelemente (S1-S4) des jeweiligen Teilmoduls (130) anzusteuern und ihre Betriebsspannung von dem Kondensator (C) des jeweiligen Teilmoduls (130) zu erhalten, und
- die Anordnung (10) mindestens eine Umschalteinrichtung (160-162, 190, 192) aufweist, die mit der zumindest einen Reihenschaltung (R) in Verbindung steht und dazu eingerichtet ist, gesteuert von der Ansteuereinheit (30) die an der Reihenschaltung (R) anliegende Reihenschaltungsspannung (Ur) umzuschalten und nach einer Inbetriebnahme der Anordnung (10) - zum Aufladen der Kondensatoren (C) der Teilmodule (130) - in einen Auflademodus geschaltet zu werden, in dem sie die zumindest eine Reihenschaltung (R) anders beschaltet als in einem sich nach Abschluss des Auflademodus an den Auflademodus anschließenden Normalbetriebsmodus.

2. Anordnung (10) nach Anspruch 1,
**dadurch gekennzeichnet, dass**
die Umschalteinrichtung (160-162, 190, 192) dazu eingerichtet ist, in dem Auflademodus die Reihenschaltung (R) mit einer höheren Reihenschaltungsspannung (Ur) zu beaufschlagen als in dem Normalbetriebsmodus.

3. Anordnung (10) nach einem der voranstehenden Ansprüche,
**dadurch gekennzeichnet, dass**
die Ansteuereinheit (30) dazu eingerichtet ist, die Umschalteinrichtung (160-162, 190, 192) von dem Auflademodus in den Normalbetriebsmodus umzuschalten, sobald alle Steuereinrichtungen der Teilmodule (130) der Ansteuereinheit (30) Betriebsbereitschaft, insbesondere eine für einen Betrieb ausreichende Kondensatorspannung (Uzk) des jeweiligen Teilmoduls (130), anzeigen.

4. Anordnung (10) nach einem der voranstehenden Ansprüche,
**dadurch gekennzeichnet, dass**
- die Anordnung (10) mehrphasig ist und eine Mehrzahl, zumindest zwei, an Wechselspannungsanschlüssen (L1, L2, L3) aufweist, an denen jeweils ein Phasenstrom eines mehrphasigen Eingangswechselstromes (Ie) eingespeist oder entnommen werden kann,
- wobei die Anordnung (10) pro Phase jeweils zumindest eine Reihenschaltung (R) mit mindestens zwei in Reihe geschalteten Teilmodulen (130) umfasst.

5. Anordnung (10) nach einem der voranstehenden Ansprüche,
**dadurch gekennzeichnet, dass**
die Umschalteinrichtung (160-162, 190, 192) dazu eingerichtet ist, in dem Auflademodus die an sie angeschlossenen Reihenschaltungen (R) jeweils mit einer zwischen zwei Wechselspannungsanschlüssen (L1, L2, L3) anliegenden Leiter-Leiter-Spannung zu beaufschlagen.

6. Anordnung (10) nach einem der voranstehenden Ansprüche,
**dadurch gekennzeichnet, dass**
- die Anordnung (10) dreiphasig ist und
- die Umschalteinrichtung (160-162, 190, 192) dazu eingerichtet ist, die an sie angeschlossenen Reihenschaltungen (R) in dem Auflademodus elektrisch in eine Dreieckschaltung zu schalten.

7. Anordnung (10) nach einem der voranstehenden Ansprüche,
**dadurch gekennzeichnet, dass**
- die Umschalteinrichtung (160-162, 190, 192) dazu eingerichtet ist, die an sie angeschlossenen Reihenschaltungen (R) in dem Normalbetriebsmodus elektrisch in eine Sternpunktschaltung zu schalten,
- wobei der Sternpunkt (Y) der Sternpunktschaltung einen Pol eines ausgangsseitigen Spannungssystems der Anordnung (10) bildet, geerdet ist oder potentialmäßig schwebt.

8. Anordnung (10) nach einem der voranstehenden Ansprüche,
**dadurch gekennzeichnet, dass**
die Kondensatoren (C) der Teilmodule (130) in dem Auflademodus mit einem an den Wechselspannungsanschlüssen (L1, L2, L3) eingespeisten Wechselstrom (Ie) geladen werden.

9. Anordnung (10) nach einem der voranstehenden Ansprüche,
**dadurch gekennzeichnet, dass**
die Anordnung (10) zumindest zwei Gleichspannungsanschlüsse (DC1, DC2) aufweist, in die ein Gleichstrom in die Anordnung (10) eingespeist oder über die ein Gleichstrom aus der Anordnung (10) entnommen werden kann.

10. Anordnung (10) nach einem der voranstehenden Ansprüche,
**dadurch gekennzeichnet, dass**
die Anordnung (10) zumindest zwei Umschalteinrichtungen (160-162, 190, 192) aufweist, die dazu eingerichtet sind, die an sie angeschlossenen Reihenschaltungen (R) in dem Normalbetriebsmodus jeweils in eine Sternpunktschaltung zu schalten.

11. Anordnung (10) nach einem der voranstehenden Ansprüche 9 bis 10,
**dadurch gekennzeichnet, dass**
die zumindest zwei Gleichspannungsanschlüsse (DC1, DC2) jeweils mit einem Sternpunkt (Y) einer der zwei Sternpunktschaltungen verbunden sind.

12. Anordnung (10) nach einem der voranstehenden Ansprüche 9 bis 11,
**dadurch gekennzeichnet, dass**
die Umschalteinrichtung (160-162, 190, 192) dazu eingerichtet ist, in dem Auflademodus die Kondensatoren (C) der Teilmodule (130) der zumindest einen an sie angeschlossenen Reihenschaltung (R) mit einem an den zwei Gleichspannungsanschlüssen (DC1, DC2) eingespeisten Gleichstrom zu laden.

13. Anordnung (10) nach einem der voranstehenden Ansprüche,
**dadurch gekennzeichnet, dass**
die Umschalteinrichtung (160-162, 190, 192) dazu eingerichtet ist, in dem Auflademodus die Reihenschaltung (R) bzw. die Reihenschaltungen (R) jeweils mit zumindest einem Ladevorwiderstand (170) in Reihe zu schalten.

14. Anordnung (10) nach einem der voranstehenden Ansprüche,
**dadurch gekennzeichnet, dass**
die Anordnung (10) einen Multilevelumrichter bildet.

15. Verfahren zum Betreiben einer Anordnung (10) mit
- zumindest einem Wechselspannungsanschluss (L1, L2, L3), an dem ein Wechselstrom (Ie) eingespeist oder entnommen werden kann,
- zumindest einer Reihenschaltung (R) mit mindestens zwei in Reihe geschalteten Teilmodulen (130) und
- einer Ansteuereinheit (30) zur Ansteuerung der Teilmodule (130),
- wobei die Teilmodule (130) der Reihenschaltung (R) jeweils mindestens zwei Schaltelemente (S1-S4) und einen Kondensator (C) umfassen,
**dadurch gekennzeichnet, dass**
- die mindestens zwei Schaltelemente (S1-S4) der Teilmodule (130) jeweils mit einer mit der Ansteuereinheit (30) in Verbindung stehenden teilmoduleigenen Steuereinrichtung (150) gesteuert werden, die ihre Betriebsspannung von dem Kondensator (C) des jeweiligen Teilmoduls (130) erhält, und
- mit mindestens einer Umschalteinrichtung (160-162, 190, 192) die an der Reihenschaltung (R) anliegende Reihenschaltungsspannung (Ur) nach einer Inbetriebnahme der Anordnung (10) - zum Aufladen der Kondensatoren (C) der Teilmodule (130) - in einen Auflademodus geschaltet wird, in dem die Umschalteinrichtung (160-162, 190, 192) die zumindest eine Reihenschaltung (R) anders beschaltet als in einem sich nach Abschluss des Auflademodus an den Auflademodus anschließenden Normalbetriebsmodus.

## Claims

1. Arrangement (10) having
- at least one AC voltage connection (L1, L2, L3), at which an alternating current (Ie) can be fed in or withdrawn,
- at least one series circuit (R) having at least two submodules (130) connected in series and
- a drive unit (30) for driving the submodules (130),
- wherein the submodules (130) of the series circuit (R) each comprise at least two switching elements (S1-S4) and a capacitor (C),
**characterized in that**
- the submodules (130) each have a submodule-specific control device (150) connected to the drive unit (30), said control device being configured to drive the switching elements (S1-S4) of the respective submodule (130) and to obtain its operating voltage from the capacitor (C) of the respective submodule (130), and
- the arrangement (10) has at least one changeover device (160-162, 190, 192), which is connected to the at least one series circuit (R) and, in a manner controlled by the drive unit (30), is configured to change over the series circuit voltage (Ur) applied to the series circuit (R) and, after start-up of the arrangement (10) - in order to charge the capacitors (C) of the submodules (130) -, to be switched to a charging mode, in which it connects the at least one series circuit (R) differently than in a normal operating mode that follows the charging mode after conclusion of the charging mode.

2. Arrangement (10) according to Claim 1, **characterized in that** the changeover device (160-162, 190, 192) is configured to supply the series circuit (R) with a higher series circuit voltage (Ur) in the charging mode than in the normal operating mode.

3. Arrangement (10) according to either of the preceding claims, **characterized in that** the drive unit (30) is configured to change over the changeover device (160-162, 190, 192) from the charging mode to the normal operating mode as soon as all control devices of the submodules (130) of the drive unit (30) indicate operational readiness, in particular a capacitor voltage (Uzk) of the respective submodule (130) that is sufficient for operation.

4. Arrangement (10) according to one of the preceding claims, **characterized in that**
- the arrangement (10) is polyphase and has a plurality of, at least two, AC voltage connections (L1, L2, L3), at which in each case a phase current of a polyphase input alternating current (Ie) can be fed in or withdrawn,
- wherein the arrangement (10) comprises in each case at least one series circuit (R) per phase, said at least one series circuit having at least two submodules (130) connected in series.

5. Arrangement (10) according to one of the preceding claims, **characterized in that**, in the charging mode, the changeover device (160-162, 190, 192) is configured to supply the series circuits (R) connected thereto in each case with a line-to-line voltage applied between two AC voltage connections (L1, L2, L3).

6. Arrangement (10) according to one of the preceding claims, **characterized in that**
- the arrangement (10) is three-phase and,
- in the charging mode, the changeover device (160-162, 190, 192) is configured to electrically connect the series circuits (R) connected thereto in a delta circuit.

7. Arrangement (10) according to one of the preceding claims, **characterized in that**
- in the normal operating mode, the changeover device (160-162, 190, 192) is configured to electrically connect the series circuits (R) connected thereto in a star-point circuit,
- wherein the star point (Y) of the star-point circuit forms a pole of an output-side voltage system of the arrangement (10), is earthed or floats with respect to potential.

8. Arrangement (10) according to one of the preceding claims, **characterized in that**, in the charging mode, the capacitors (C) of the submodules (130) are charged using an alternating current (Ie) fed in at the AC voltage connections (L1, L2, L3).

9. Arrangement (10) according to one of the preceding claims, **characterized in that** the arrangement (10) has at least two DC voltage connections (DC1, DC2), into which a direct current can be fed into the arrangement (10) or by means of which a direct current can be withdrawn from the arrangement (10).

10. Arrangement (10) according to one of the preceding claims, **characterized in that** the arrangement (10) has at least two changeover devices (160-162, 190, 192), which, in the normal operating mode, are configured to connect the series circuits (R) connected thereto in each case in a star-point circuit.

11. Arrangement (10) according to one of the preceding Claims 9 to 10, **characterized in that** the at least two DC voltage connections (DC1, DC2) are each connected to a star point (Y) of one of the two star-point circuits.

12. Arrangement (10) according to one of the preceding Claims 9 to 11, **characterized in that**, in the charging mode, the changeover device (160-162, 190, 192) is configured to charge the capacitors (C) of the submodules (130) of the at least one series circuit (R) connected thereto using a direct current fed in at the two DC voltage connections (DC1, DC2).

13. Arrangement (10) according to one of the preceding claims, **characterized in that**, in the charging mode, the changeover device (160-162, 190, 192) is configured to connect the series circuit (R) or the series circuits (R) in each case in series with at least one series charging resistor (170).

14. Arrangement (10) according to one of the preceding claims, **characterized in that** the arrangement (10) forms a multilevel converter.

15. Method for operating an arrangement (10) having
- at least one AC voltage connection (L1, L2, L3), at which an alternating current (Ie) can be fed in or withdrawn,
- at least one series circuit (R) having at least two submodules (130) connected in series and
- a drive unit (30) for driving the submodules (130),
- wherein the submodules (130) of the series circuit (R) each comprise at least two switching elements (S1-S4) and a capacitor (C),
**characterized in that**
- the at least two switching elements (S1-S4) of the submodules (130) are each controlled using a submodule-specific control device (150) connected to the drive unit (30), said control device obtaining its operating voltage from the capacitor (C) of the respective submodule (130), and,
- using at least one changeover device (160-162, 190, 192), the series circuit voltage (Ur) applied to the series circuit (R) after start-up of the arrangement (10) - in order to charge the capacitors (C) of the submodules (130) - is switched to a charging mode, in which the changeover device (160-162, 190, 192) connects the at least one series circuit (R) differently than in a normal operating mode that follows the charging mode after conclusion of the charging mode.

## Revendications

1. Montage (10) comprenant
- au moins une borne (L1, L2, L3) de tension alternative, à laquelle un courant (Ie) alternatif peut être injecté ou prélevé,
- au moins un circuit (R) série ayant au moins deux modules (130) partiels montés en série et
- une unité (30) de commande pour la commande des modules (130) partiels,
- dans lequel les modules (130) partiels du circuit (R) série comprennent chacun au moins deux éléments (S1 à S4) de coupure et un condensateur (C),
**caractérisé en ce que**
- les modules (130) partiels ont chacun un dispositif (150) de commande propre au module partiel, en liaison avec l'unité (30) de commande, dispositif (150) de commande qui est conçu pour commander les éléments (S1 à S4) de coupure du module (130) partiel respectif et recevoir sa tension de fonctionnement du condensateur (C) du module (130) partiel respectif et
- le montage (10) a au moins un dispositif (160 à 162, 190, 192) de commutation, qui est en liaison avec le au moins un circuit (R) série et qui est conçu pour, en étant commandé par l'unité (30) de commande, commuter la tension (Ur) de circuit série s'appliquant au circuit (R) série et, après une mise en service, être mis - pour la charge des condensateur (C) des modules (130) partiels - dans un mode de charge, dans lequel il met le au moins un circuit (R) série en circuit autrement que dans un mode de fonctionnement normal faisant suite au mode de charge après la fin du mode de charge.

2. Montage (10) suivant la revendication 1,
**caractérisé en ce que**
le dispositif (160 à 162, 190, 192) de commutation est conçu pour appliquer, dans le mode de charge au circuit (R) série, une tension (Ur) de circuit série plus haute que dans le mode de fonctionnement normal.

3. Montage (10) suivant l'une des revendications précédentes,
**caractérisé en ce que**
l'unité (30) de commande est conçue pour commuter le dispositif (160 à 162, 190, 192) de commutation, du mode de charge au mode de fonctionnement normal, dès que tous les dispositifs de commande des modules (130) partiels indiquent à l'unité (30) de commande que l'on est prêt à fonctionner, notamment une tension (Uzk) de condensateur, suffisante pour un fonctionnement, du module (130) partiel respectif.

4. Montage (10) suivant l'une des revendications précédentes,
**caractérisé en ce que**
- le montage (10) est polyphasé et a une pluralité, au moins deux, de bornes (L1, L2, L3) de tension alternative, auxquelles, respectivement, un courant de phase d'un courant (Ie) alternatif d'entrée polyphasé peut être injecté ou prélevé,
- dans lequel le montage (10) comprend par phase, respectivement, au moins un circuit (R) série ayant au moins deux modules (130) partiels montés en série.

5. Montage (10) suivant l'une des revendications précédentes,
**caractérisé en ce que**
le dispositif (160 à 162, 190, 192) de commutation est conçu pour appliquer dans le mode de charge, aux circuits (R) série connectés, respectivement, une tension de conducteur-conducteur s'appliquant entre deux bornes (L1, L2, L3) de tension alternative.

6. Montage (10) suivant l'une des revendications précédentes,
**caractérisé en ce que**
- le montage (10) est triphasé et
- le dispositif (160 à 162, 190, 192) de commutation est conçu pour mettre, suivant un circuit en triangle électriquement, dans le mode de charge, les circuits (R) série, qui lui sont connectés.

7. Montage (10) suivant l'une des revendications précédentes,
**caractérisé en ce que**
- le dispositif (160 à 162, 190, 192) de commutation est conçu pour mettre électriquement, suivant un circuit à point neutre, dans le mode de fonctionnement normal, les circuits (R) série, qui lui sont connectés,
- dans lequel le point (Y) neutre du circuit à point neutre forme un pôle d'un système de tension du côté de la sortie du montage (10), est mis à la terre ou fluctue en potentiel.

8. Montage (10) suivant l'une des revendications précédentes,
**caractérisé en ce que**
les condensateur (C) des modules (130) partiels sont chargés dans le mode de charge par un courant (Ie) alternatif injecté aux bornes (L1, L2, L3) de tension alternative.

9. Montage (10) suivant l'une des revendications précédentes,
**caractérisé en ce que**
le montage (10) a au moins deux bornes (DC1, DC2) de tension continue, auxquelles un courant continu peut être injecté dans le montage (10) ou par lesquelles un courant continu peut être prélevé du montage (10).

10. Montage (10) suivant l'une des revendications précédentes,
**caractérisé en ce que**
le montage (10) a au moins deux dispositifs (160 à 162, 190, 192) de commutation, qui sont conçus pour mettre, dans le mode de fonctionnement normal, respectivement, dans un circuit à point neutre, les circuits (R) série, qui leur sont connectés.

11. Montage (10) suivant l'une des revendications 9 à 10 précédentes,
**caractérisé en ce que**
les au moins deux bornes (DC1, DC2) de tension continue sont reliées chacune à un point (Y) neutre de l'un des deux circuits à point neutre.

12. Montage (10) suivant l'une des revendications 9 à 11 précédentes,
**caractérisé en ce que**
le dispositif (160 à 162, 190, 192) de commutation est conçu pour, dans le mode de chargement, charger les condensateurs
(C) des modules (130) partiels du au moins un circuit (R) série, qui lui est connecté, par un courant continu injecté aux deux bornes (DC1, DC2) de tension continue.

13. Montage (10) suivant l'une des revendications précédentes,
**caractérisé en ce que**
le dispositif (160 à 162, 190, 192) de commutation est conçu pour, dans le mode de charge, mettre le circuit (R) série ou les circuits (R) série chacun en série avec au moins une résistance (170) de charge.

14. Montage (10) suivant l'une des revendications précédentes,
**caractérisé en ce que**
le montage (10) forme un onduleur à plusieurs niveaux.

15. Procédé pour faire fonctionner un montage (10), comprenant
- au moins une borne (L1, L2, L3) de tension alternative, à laquelle un courant (Ie) alternatif peut être injecté ou prélevé,
- au moins un circuit (R) série ayant au moins deux modules (130) partiels montés en série et
- une unité (30) de commande pour la commande des modules (130) partiels,
- dans lequel les modules (130) partiels du circuit (R) série comprennent chacun au moins deux éléments (S1 à S4) de coupure et un condensateur (C),
**caractérisé en ce que**
- on commande les au moins deux éléments (S1 à S4) de coupure de modules (130) partiels chacun par un dispositif (150) de commande propre au module partiel et en liaison avec l'unité (30) de commande, dispositif (150) de commande qui reçoit sa tension de fonctionnement du condensateur (C) du module (130) partiel respectif, et
- par au moins un dispositif (160 à 162, 190, 192) de commutation, on applique, dans un mode de charge - pour charger les condensateurs (C) des modules (130) partiels - la tension (Ur) de circuit série s'appliquant au circuit (R) série, après une mise en fonctionnement du montage (10), mode de charge dans lequel le dispositif (160 à 162, 190, 192) de commutation met en circuit le au moins un circuit (R) série autrement que dans un mode de fonctionnement normal faisant suite au mode de charge, après la fin du mode de charge.
